# EUROPEAN PATENT SPECIFICATION

(11) **EP 0 286 352 B1**
(45) Date of publication and mention of the grant of the patent: **11.01.1995**
(21) Application number: 88303012.4
(22) Date of filing: 05.04.1988
(51) Int. Cl.: G06F 9/26

(54) **Entry point mapping and skipping method and apparatus**
Verfahren und Apparat zum Überspringen mittels Abbildung einer Einsprungstelle
Méthode et dispositif de saut utilisant un mapping du point d'entrée

(30) Priority: 10.04.1987 US 36606
(43) Date of publication of application: 12.10.1988
(73) Proprietor: TANDEM COMPUTERS INCORPORATED, Cupertino California 95014-2599 (US)
(72) Inventor: Fu, Peter L., Sunnyvale California 94087 (US); Lenoski, Daniel E., 44 Mountain View California 94040 (US)
(74) Representative: Ayers, Martyn Lewis Stanley

(56) References cited:
- MICROPROCESSORS & MICROSYSTEM., vol. 4, no.2, February 1980, pages 57-62, IPC Business Press, Surrey, GB; D. IBRAHIM:"Design of a microprogrammable computer with bit-slice devices"

## Description

### BACKGROUND

The present invention relates to methods and apparatus for mapping a macro-instruction to a microcode instruction memory.

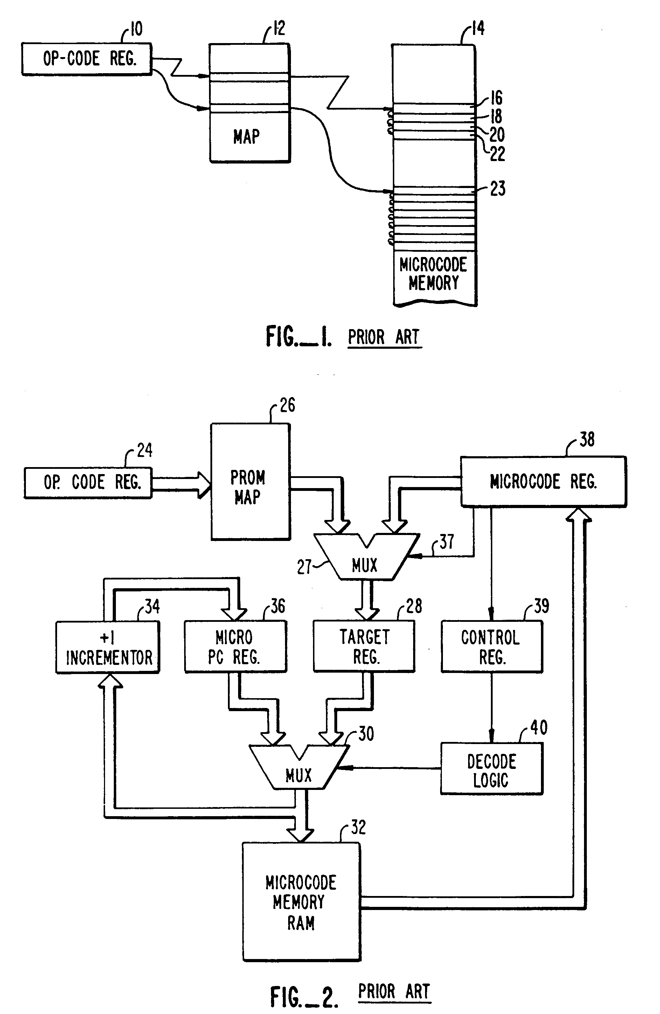

Many computers today execute instructions by storing a number of microcode instructions for each macro-instruction in a microcode memory. The microcode instructions are then executed for the particular macro-instruction to implement the macro-instruction. A typical method is shown in Fig. 1, where a macro-instruction is placed into an operation code instruction register 10. The instruction in register 10 is then decoded by a mapping circuit 12 to produce an address which is provided to a microcode memory 14. This address will be the address of the first micro-instruction in a series of micro-instructions to implement the particular macro-instruction. The remaining micro-instructions are obtained by incrementing the first micro-instruction address 16 by one after that micro-instruction is executed to produce successive micro-instructions 18, 20 and 22 for the macro-instruction. An example of this typical prior art method is given at pages 61-62 of the article in Microprocessors and Microsystems, Vol.4, N°2, March 1980, pages 57-62.

In one implementation, each macro-instruction is allocated a fixed number of micro-instructions. If this fixed number is four, for instance, then any macro-instruction which requires more than four micro-instructions must include a jump in the last micro-instruction to a separate area of the microcode memory 14. A jump is undesirable because it places additional requirements on the microcode in terms of time or space. To do a jump, a jump address must be specified, and this requires space. In addition, another clock cycle may be required for a jump. To avoid the requirement of a jump, enough space can be allocated to accommodate the largest macro-instruction, but this results in a large number of wasted memory spaces for macro-instructions which require less than the maximum number of micro-instructions. Alternately, the microcode memory could be divided into groups of different fixed sizes with the sizes varying by a power of two (i.e., groups of four, eight, sixteen, etc.). Thus, a short macro-instruction could be allocated for microcode addresses 16-22 as shown in Fig. 1, while a longer macro-instruction can be allocated eight microcode memory addresses starting at location 23 as shown in Fig. 1. Numbers of microcode addresses which are not a power of two cannot be accommodated without requiring additional circuitry for mapping circuit 12. A power of two implementation can be done simply by blocking out unwanted bits to result in a higher number.

Map circuit 12 could be implemented to accommodate a particular instruction set so that the number of micro-instruction addresses allocated to a particular macro-instruction varies. This would require that either the instruction set be fixed at the time the map is fixed or that the map circuit itself be programmable.

### SUMMARY OF THE INVENTION

The present invention uses a fixed entry-point map to produce an entry point address of a first micro-instruction for a particular macro-instruction. That address is then incremented by a fixed number, such as 512, to produce the second, third, etc. micro-instructions for that macro-instruction. After a fixed number of these 512 address skips, such as 6, the addresses are incremented by 1 so that successive micro-instructions are in adjacent address locations.

The determination of whether to increment the address by 512 or by 1 is done by a decode circuit which simply looks at the current address to determine whether it is in the skipping region of the microcode memory or the successive incrementing region. The present invention thus provides flexibility to the micro-instruction addressing with the minimal addition of circuitry. In addition, the method of the present invention allows the entry point map to be fixed, and thus there is no need for it to be programmable.

The macro-instructions are arranged so that any macro-instruction requiring more than six micro-instructions is followed by one or more macro-instructions which require six or less micro-instructions. Thus, when the first macro-instruction starts executing the micro-instructions in the increment by one region of memory, these memory addresses will be available since the next succeeding macro-instructions will not extend that far.

Alternately, a variable skipping region can be used to give more flexibility. This flexibility enables the skipping regions to be determined when the code is written, thus enabling the optimization of memory space. A variable skipping region implementation requires a slightly more complex method of determining whether the address should be an increment of one or a skip increment upon returns from subroutine calls, since it is not simply dependent upon the fixed address.

For a fuller understanding of the nature and advantages of the invention, reference should be made to the ensuing detailed description taken in conjunction with the accompanying drawings.

### BRIEF DESCRIPTION OF THE DRAWINGS

Fig. 1 is a diagram of a microcode memory mapping scheme of the prior art;
Fig. 2 is a block diagram of a prior art microcode addressing circuit;
Fig. 3 is a diagram of a microcode mapping scheme according to the present invention; and
Fig. 4 is a block diagram of a microcode addressing scheme according to the present invention.

### DETAILED DESCRIPTION OF THE PREFERRED EMBODIMENTS

Fig. 2 shows one type of implementation of microcode address generation according to the prior art which will aid in understanding the present invention. An operation code register 24 stores a macro-instruction which is decoded by a map circuit 26 to provide a microcode memory address to target register 28. Map circuit 26 is shown as being a programmable read-only memory (PROM), but could take other forms. Target register 28 receives the initial address from map circuit 26 through multiplexer 27 and provides it through a multiplexer 30 to the microcode memory 32. The micro-instruction at that address is provided to microcode register 38. The address is then incremented by a +1 incrementer 34 which is then provided to a micro program counter register 36. This incremented address is provided through multiplexer 30 back to memory 32 to provide the next micro-instruction to microcode register 38. This type of incrementing continues until there is a jump or other instruction which is detected by decode logic 40. Typically, a jump is executed by providing a jump address from microcode register 38 to multiplexer 27. A select signal 37 is provided from microcode register 38 to select the microcode jump address from microcode register 38 which is then provided to target register 28. A control bit or bits are latched into control register 39 which are then decoded by decode logic 40. Decode logic 40 then provides a select signal to multiplexer 30 to select a jump address in target register 28 as opposed to the incrementing address from micro program counter register 36. At the end of a micro-instruction, an instruction dispatch jump is done in which select signal 37 from multiplexer 27 selects the next instruction address from map circuit 26, and a new instruction is then executed.

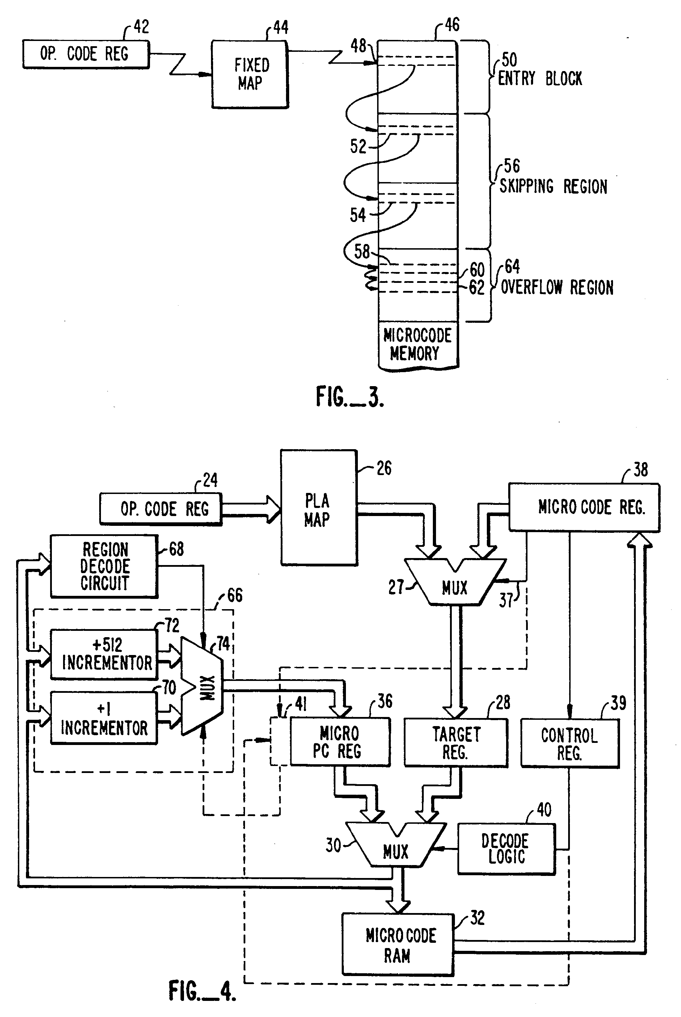

Fig. 3 is a diagram of a microcode memory mapping scheme according to the present invention. An operation code register 42 is provided to hold a macro-instruction. A fixed map 44 decodes the macro-instruction to produce an address to a microcode memory 46. The first address provided is an entry point address 48 in an entry block 50. The next micro-instruction is found by incrementing address 48 by a fixed number to produce a second address 52. This address is in turn incremented by the same number to produce a third address 54. These addresses are located in a skipping region 56, which, in one embodiment, includes six skips for each macro-instruction (only three are shown in Fig. 3). After the six skips, an address 58 is incremented by one to produce addresses 60 and 62 in succession in an overflow region 64.

This mapping scheme provides flexibility for mapping macro-instructions having different numbers of micro-instructions. For instance, if entry point address 48 is address 212 and the macro-instructions having entry point addresses of 213 and 214 are less than six micro-instructions long, then address locations 60 and 62 will be blank, allowing the macro-instructions starting at address 48 to have eight micro-instructions. By appropriate placement of the starting address of each macro-instruction, the instructions can be mapped to make optimum use of the memory by appropriate programming of the microcode while at the same time allowing for a simple fixed map 44 because of the fixed entry point address for each macro-instruction. The use of a fixed entry point allows smaller, faster logic to be used. The logic is high speed because less logic is required than a RAM or PROM. In addition, because the logic is special purpose, it takes up less space than a RAM or PROM, which is especially important when the circuit is put on an integrated circuit.

A block diagram of a circuit to implement the mapping scheme of Fig. 3 is shown in Fig. 4. The block diagram of Fig. 4 follows the basic structure of that of Fig. 2. However, instead of using a +1 incrementer 34 as in Fig. 2, a variable incrementer 66 is used with a memory region decode circuit 68. Variable incrementer 66 includes a +1 incrementer 70 and a +512 incrementer 72 as well as a multiplexer 74. In operation, the address provided to microcode RAM 32 is incremented by 512 by incrementer 72 with the new address being passed through multiplexer 74 to microcode program counter register 36. This process continues until memory region decode circuit 68 detects that the address corresponds to overflow region 64 of Fig. 3. At this point, decode circuit 68 provides a select signal to multiplexer 74 to select the output of +1 incrementer 70. Accordingly, thereafter the address to microcode RAM 32 is incremented by 1 as shown in Fig. 3.

Although variable incrementer 66 is shown as a pair of incrementers and a multiplexer for sake of understanding, it can be implemented with a single counter which allows for multiple carry bit inputs. Region decode circuit 68 can simply select a position of the carry bit to vary the increment. Decode circuit 68 only needs to look at the upper bits of the address to determine whether it is in overflow region 64.

Although a 512 increment which is repeated six times is shown, any other numbers could be used. Fig. 3 actually shows three skips in the skipping region, although any other number could be used.

In an alternate embodiment, the skipping region of Fig. 3 can be made of variable length. This provides additional flexibility when the microcode is programmed. For instance, if a number of instructions requiring only a few address locations each, such as three each, are grouped together, then a block of memory in the section which would normally correspond to the fourth address location for each instruction is freed for other uses.

In one implementation of a variable skipping region, skipping is done until there is a jump or branch in the program. In this case, upon a return from the jump or branch, the skipping incrementer is no longer used and the +1 incrementer is used. As shown in Fig. 4, an extra bit can be stored in a position 41 shown in phantom attached to micro PC register 36. A control line from bit position 41 is provided to multiplexer 74. This control line replaces the select line from region decode circuit 68, which would not be used in this implementation. Upon a branch, a bit is stored in position 41 and upon return from branch, this bit selects incrementer 70 by the appropriate control signal to multiplexer 74. Typically, the branch address is stored in a return stack (not shown). The extra bit is positioned in the return address stack so that when the address is provided to micro PC register 36, this bit is in position 41. The input to bit position 41 is provided by control signal line 37, shown in phantom. The loading of this bit into micro PC register 36 is done by a load control signal from control register 39 (shown in phantom).

The variable skipping embodiment thus allows variation in the number of address locations per instruction while still maintaining the fixed entry point mapping system. This flexibility allows changes to be made to the microcode as it becomes more complicated or simpler by adjusting the skipping region. In addition, regions which are not a power of two with respect to each other can be used, since the determination of the region length is done by the positioning of the jump instruction, and not by the addition of circuitry to the mapping circuit.

As will be understood by those familiar with the art, the present invention may be embodied in other specific forms without departing from the spirit or essential characteristics thereof. For example, instead of using a decoding circuit to determine whether the address is in the skipping region or the overflow region, a counter could be used to count the number of skipping increments by incrementer 72. The variable skipping region could also be implemented in different ways, such as by using a bit in the microcode instruction so that the skipping region is not dependent upon jumps. Accordingly, the disclosure of the preferred embodiments of the invention is intended to be illustrative, but not limiting, of the scope of the invention which is set forth in the following claims.

## Claims

1. A method for implementing a macro-instruction by addressing a series of microcode instructions in a memory comprising the steps of:
a) providing an entry point address of said memory in response to said macro-instruction;
b) incrementing said entry point address by a first predetermined number to provide an address of a next microcode instruction in said memory;
c) repeating step b) for a second number of times to produce successive microcode instructions;
d) incrementing said microcode instruction address by one after incrementing said address said second number of times;
e) repeating step d) for a remaining number of microcode instructions for said macro-instruction.

2. The method of claim 1 wherein said second number is fixed.

3. The method of claim 2 further comprising the steps of incrementing said microcode instruction address by one during jumps, said incrementing during jumps being excluded from said second number.

4. The method of claim 2 wherein said first predetermined number is 512.

5. The method of claim 2 wherein said second predetermined number is five.

6. The method of claim 2 further comprising the step of arranging said entry point address for a plurality of macro-instructions such that a macro-instruction having a third number of microcode instructions more than said second number plus one is followed by said third number of macro-instructions having a number of microcode instructions less than or equal to said second number plus one.

7. The method of claim 1 wherein said second number is variable.

8. The method of claim 7 wherein said second number is a number of microcode instructions up to a first jump.

9. An apparatus for implementing a macro-instruction by addressing a series of microcode instructions in a memory comprising:
an instruction register for holding said macro-instruction;
means, responsive to said macro-instruction, for providing an entry point address of said memory;
first means for incrementing said address by a first predetermined number;
second means for incrementing said address by one; and
means for coupling an output of said first means for incrementing to said memory for a second number of increments of said address and thereafter coupling said second means for incrementing to said memory.

10. The apparatus of claim 9 wherein said second number is fixed.

11. The apparatus of claim 10 wherein said means for providing an entry point address is permanently fixed.

12. The apparatus of claim 10 wherein said first number is 512.

13. The apparatus of claim 10 wherein said second number is six.

14. The apparatus of claim 10 wherein said first and second means for incrementing comprise a single counter having multiple carry inputs.

15. The apparatus of claim 10 wherein said means for coupling comprises a decode circuit responsive to a portion of a current microcode memory address to produce a signal to select said first means for incrementing for a first block of addresses and said second means for incrementing for a second block of addresses.

16. The apparatus of claim 9 wherein said second number is variable.

17. The apparatus of claim 16 wherein said means for coupling comprises a bit output of a micro program counter register, said bit output corresponding to a bit input, and further comprising a microcode instruction register having an output coupled to said bit input.

18. The apparatus of claim 17 wherein said bit output has a separate load enable, and further comprising a control register having an input coupled to said microcode instruction register and an output coupled to said load enable.

19. An apparatus for implementing a macro-instruction by addressing a series of microcode instructions in a memory comprising:
an instruction register for holding said macro-instruction;
means, responsive to said macro-instruction, for providing a fixed entry point address of said memory;
first means for incrementing said address by a first predetermined number;
second means for incrementing said address by one; and
a decode circuit responsive to a portion of a current microcode memory address to produce a signal to select said first means for incrementing for a first block of addresses and said second means for incrementing for a second block of addresses.

## Patentansprüche

1. Verfahren zum Implementieren eines Makrobefehls durch Adressieren einer Reihe von Mikrocodebefehlen in einem Speicher, enthaltend die Schritte:
a) Bereitstellen einer Einsprungstellenadresse des Speichers in Abhängigkeit von dem Makrobefehl,
b) Inkrementieren der Einsprungstellenadresse um eine erste vorgegebene Zahl, um eine Adresse eines nächsten Mikrocodebefehls in dem Speicher bereitzustellen,
c) Wiederholen des Schrittes b) eine zweite Anzahl mal, um nachfolgende Mikrocodebefehle zu erzeugen,
d) Inkrementieren der Mikrocodebefehlsadresse um eins nach dem Inkrementieren der Adresse eine zweite Anzahl mal,
e) Wiederholen des Schritte d) für eine verbleibende Zahl von Mikrocodebefehlen für den Makrobefehl.

2. Verfahren nach Anspruch 1, wobei die zweite Anzahl fest ist.

3. Verfahren nach Anspruch 2, ferner enthaltend die Schritte des Inkrementierens der Mikrocodebefehlsadresse um eins während Sprüngen, wobei das Inkrementieren während Sprüngen von der zweiten Anzahl ausgenommen ist.

4. Verfahren nach Anspruch 2, wobei die erste vorgegebene Zahl 512 ist.

5. Verfahren nach Anspruch 2, wobei die zweite vorgegebene Anzahl fünf ist.

6. Verfahren nach Anspruch 2, ferner enthaltend den Schritt des Einrichtens der Einsprungstellenadresse für eine Mehrzahl von Makrobefehlen, derart, daß einem Makrobefehl mit einer dritten Anzahl von Mikrocodebefehlen, die größer als die zweite Anzahl plus eins ist, die dritte Zahl von Makrobefehlen mit einer Anzahl von Mikrocodebefehlen folgt, die kleiner oder gleich der zweiten Anzahl plus eins ist.

7. Verfahren nach Anspruch 1, wobei die zweite Anzahl variabel ist.

8. Verfahren nach Anspruch 7, wobei die zweite Anzahl eine Anzahl von Mikrocodebefehlen bis zu einem ersten Sprung ist.

9. Vorrichtung zum Implementieren einer Makrobefehl durch Adressieren einer Reihe von Mikrocodebefehlen in einem Speicher, enthaltend:
einen Befehlsregister zum Halten des Makrobefehls,
auf den Makrobefehl ansprechende Einrichtungen zum Bereitstellen einer Einsprungstellenadresse des Speichers,
erste Einrichtungen zum Inkrementieren der Adresse um eine erste vorgegebene Zahl,
zweite Einrichtungen zum Inkrementieren der Adresse um eins, und Einrichtungen zum Koppeln eines Ausgangs der ersten Inkrementiereinrichtungen an den Speicher eine zweite Anzahl von Inkrementen der Adresse mal und zum anschließenden Koppeln der zweiten Inkrementiereinrichtungen an den Speicher.

10. Vorrichtung nach Anspruch 9. wobei die zweite Anzahl fest ist.

11. Vorrichtung nach Anspruch 10, wobei die Einrichtungen zum Bereitstellen einer Einsprungstellenadresse permanent fixiert sind.

12. Vorrichtung nach Anspruch 10, wobei die erste Zahl 512 ist.

13. Vorrichtung nach Anspruch 10, wobei die zweite Anzahl sechs ist.

14. Vorrichtung nach Anspruch 10, wobei die ersten und zweiten Inkrementiereinrichtungen einen einzelnen Zähler mit Mehrfachübertragungseingängen enthalten.

15. Vorrichtung nach Anspruch 10, wobei die Koppeleinrichtungen eine auf einen Teil einer gegenwärtigen Mikrocodespeicheradresse ansprechende Dekodierschaltung enthalten, um ein Signal zu erzeugen, um die ersten Inkrementiereinrichtungen für einen ersten Adressenblock und die zweiten Inkrementiereinrichtungen für einen zweiten Adressenblock auszuwählen.

16. Vorrichtung nach Anspruch 9 wobei die zweite Anzahl variabel ist.

17. Vorrichtung nach Anspruch 16, wobei die Koppeleinrichtungen einen Bit-Ausgang eines Mikroprogrammzählerregisters enthalten, wobei der Bit-Ausgang einem Bit-Eingang entspricht, und ferner einen Mikrocodebefehlsregister enthält, der einen an den Bit-Eingang gekoppelten Ausgang hat.

18. Vorrichtung nach Anspruch 17, wobei der Bit-Ausgang eine getrennte Ladefreigabe hat, und ferner ein Steuerregister enthalten ist, der einen an den Mikrocodebefehlsregister gekoppelten Eingang und einen an die Ladefreigabe gekoppelten Ausgang hat.

19. Vorrichtung zum Implementieren einer Makrobefehl durch Adressieren einer Reihe von Mikrocodebefehlen in einem Speicher, enthaltend:
einen Befehlsregister zum Halten des Makrobefehls,
auf den Makrobefehl ansprechende Einrichtungen zum Bereitstellen einer Einsprungstellenadresse des Speichers,
erste Einrichtungen zum Inkrementieren der Adresse um eine erste vorgegebene Zahl,
zweite Einrichtungen zum Inkrementieren der Adresse um eins, und eine auf einen Teil einer gegenwärtigen Mikrocodespeicheradresse ansprechende Dekodierschaltung, um ein Signal zu erzeugen, um die ersten Inkrementiereinrichtungen für einen ersten Adressenblock und die zweiten Inkrementiereinrichtungen für einen zweiten Adressenblock auszuwählen.

## Revendications

1. Procédé de mise en oeuvre d'une macro-instruction en adressant dans une mémoire une série d'instructions de microcodes, comprenant les étapes consistant à:
a) produire une adresse de point d'entrée de ladite mémoire en réponse à ladite macro-instruction;
b) incrémenter ladite adresse de point d'entrée d'un premier nombre prédéterminé afin de produire une adresse d'une instruction suivante de microcodes dans ladite mémoire;
c) répéter l'étape b) un deuxième nombre de fois afin de produire des instructions successives de microcodes;
d) incrémenter de un ladite adresse d'instruction de microcodes après avoir incrémenté ladite adresse ledit deuxième nombre de fois;
e) répéter l'étape d) un nombre restant d'instructions de microcodes pour ladite macro-instruction.

2. Procédé selon la revendication 1 dans lequel ledit deuxième nombre est fixe.

3. Procédé selon la revendication 2, comprenant en outre les étapes consistant à incrémenter de un ladite adresse d'instruction de microcodes pendant des sauts, ladite incrémentation pendant des sauts étant exclue dudit deuxième nombre.

4. Procédé selon la revendication 2 dans lequel ledit premier nombre prédéterminé est 512.

5. Procédé selon la revendication 2 dans lequel ledit deuxième nombre prédéterminé est cinq.

6. Procédé selon la revendication 2 comprenant en outre l'étape consistant à agencer ladite adresse de point d'entrée pour une série de macro-instructions d'une manière telle qu'une macro-instruction incluant un troisième nombre d'instructions de microcodes supérieur audit deuxième nombre augmenté de un est suivie par ledit troisième nombre de macro-instructions incluant un nombre d'instructions de microcodes inférieur ou égal audit deuxième nombre augmenté de un.

7. Procédé selon la revendication 1 dans lequel ledit deuxième nombre est variable.

8. Procédé selon la revendication 7 dans lequel ledit deuxième nombre est un nombre d'instructions de microcodes s'élevant jusqu'à un premier saut.

9. Appareil de mise en oeuvre d'une macro-instruction en adressant dans une mémoire une série d'instructions de microcodes comprenant:
un registre d'instructions pour tenir ladite macro-instruction;
un moyen, sensible à ladite macro-instruction, pour produire une adresse de point d'entrée de ladite mémoire;
un premier moyen pour incrémenter d'un premier nombre prédéterminé ladite adresse;
un deuxième moyen pour incrémenter de un ladite adresse; et
un moyen servant à coupler à ladite mémoire une sortie dudit premier moyen pour incrémenter pendant un deuxième nombre d'incréments de ladite adresse et coupler ensuite à ladite mémoire ledit deuxième moyen pour incrémenter.

10. Appareil selon la revendication 9 dans lequel ledit deuxième nombre est fixe.

11. Appareil selon la revendication 10 dans lequel ledit moyen de production d'une adresse de point d'entrée est fixe en permanence.

12. Appareil selon la revendication 10 dans lequel ledit premier nombre est 512.

13. Appareil selon la revendication 10 dans lequel ledit deuxième nombre est six.

14. Appareil selon la revendication 10 dans lequel lesdits premier et deuxième moyens pour incrémenter comprennent un compteur unique à entrées multiples de reports.

15. Appareil selon la revendication 10 dans lequel ledit moyen de couplage comprend un circuit de décodage qui répond à une partie d'une adresse actuelle de mémoire de microcodes pour produire un signal qui sert à choisir ledit premier moyen pour incrémenter pour un premier bloc d'adresses et ledit moyen pour incrémenter pour un deuxième bloc d'adresses.

16. Appareil selon la revendication 9 dans lequel ledit deuxième nombre est variable.

17. Appareil selon la revendication 16 dans lequel ledit moyen de couplage comprend une sortie de bits d'un registre de compteur de micro-programme, ladite sortie de bits correspondant à une entrée de bits, et comprenant en outre un registre d'instructions de microcodes dont une sortie est couplée à ladite entrée de bits.

18. Appareil selon la revendication 17 dans lequel ladite sortie de bits comporte une validation séparée de charge, et comprenant en outre un registre de commande incluant une entrée couplée audit registre d'instructions de microcodes et une sortie couplée à ladite validation de charge.

19. Appareil de mise en oeuvre d'une macro-instruction en adressant une série d'instructions de microcodes dans une mémoire comprenant:
un registre d'instructions pour tenir ladite macro-instruction,
un moyen de production, en réponse à ladite macro-instruction, d'une adresse fixe de point d'entrée de ladite mémoire;
un premier moyen pour incrémenter d'un premier nombre prédéterminé ladite adresse;
un deuxième moyen pour incrémenter de un ladite adresse; et
un circuit de décodage qui répond à une partie d'une adresse actuelle de mémoire de microcodes pour produire un signal afin de choisir ledit premier moyen pour incrémenter pour un premier bloc d'adresses et ledit deuxième moyen pour incrémenter pour un deuxième bloc d'adresses.
